# EUROPÄISCHE PATENTSCHRIFT

(11) **EP 1 681 311 B1**
(45) Veröffentlichungstag und Bekanntmachung des Hinweises auf die Patenterteilung: **28.11.2007**
(21) Anmeldenummer: 06100186.3
(22) Anmeldetag: 10.01.2006
(51) Int. Cl.: C08G 65/48, C08G 75/23

(54) **Verzweigte sulfonierte Polyarylether**
Branched sulfonated polyarylether
Polyarylether sulfoné ramifié

(30) Priorität: 12.01.2005 DE 102005001599
(43) Veröffentlichungstag der Anmeldung: 19.07.2006
(73) Patentinhaber: BASF Aktiengesellschaft, 67056 Ludwigshafen (DE)
(72) Erfinder: WEBER, Martin, 67487, Maikammer (DE); SANTOSO, Yohannes, Ervan, 40181, Bandung (ID)
(74) Vertreter: Isenbruck, Günter

(56) Entgegenhaltungen:
- EP-A- 0 029 633
- EP-A- 0 574 791
- WO-A-03/033565
- US-A- 3 960 815

## Beschreibung

Die vorliegende Erfindung betrifft funktionalisierte, verzweigte Polyarylether-Copolymere, ein Verfahren zu ihrer Herstellung, Polymerblends enthaltend diese Copolymere, die Verwendung von Polyarylether-Copolymeren zur Herstellung von Membranen und Membranen enthaltend wenigstens ein solches Copolymer.

Polyarylether gehören zur Gruppe der Hochleistungsthermoplaste und finden aufgrund ihrer hohen Wärmeform- und Chemikalienbeständigkeit Verwendung in hoch beanspruchten Anwendungen, siehe G. Blinne, M. Knoll, D. Müller, K. Schlichting, Kunststoffe 75, 219 (1985), E. M. Koch, H.-M. Walter, Kunststoffe 80, 1146 (1990) und D. Döring, Kunststoffe 80, 1149 (1990).

EP 0 855 428 A1 offenbart thermoplastische Formmassen mit reduzierter Wasseraufnahme, die neben einem funktionalisierten Polyolefinkautschuk und wenigstens einem modifizierten Carboxylgruppen-haltigen Polyarylether, einen linearen Sulfongruppenenthaltenden Polyarylether beinhalten. Die reduzierte Wasseraufnahme ist in einer geringen Hydrophilie begründet.

EP 0 029 633 offenbart lineare Polyarylethersulfon-Copolymere, aufgebaut aus Phenylringen, die mit Ether- oder Sulfongruppen verknüpft sind. Bestimmte Phenylringe sind mit 1 bis 4 Sulfongruppen substituiert. EP 0 029 633 offenbart auch ein Verfahren zur Herstellung dieser sulfonierten Polyarylethersulfon-Copolymere durch Umsetzung der entsprechenden Polyarylether mit konzentrierter Schwefelsäure. Die linearen Polyarylethersulfon-Copolymere weisen für viele Anwendungen nur eine ungenügende mechanische Festigkeit auf.

DE 2 305 413 offenbart verzweigte, hochmolekulare, lösliche, thermoplastische, aromatische Polyarylethersulfone aufgebaut aus aromatischen Dialkali-Bishydroxylaten, Bis-(4-Halogenaryl)-Verbindungen, deren Arylkerne durch Sulfonylgruppen verbunden sind, und aromatischen Alkalihydroxylaten und/oder solchen Halogenarylverbindungen, die wenigstens drei funktionelle Gruppen, Alkalihydroxid- oder HalogenFunktionalitäten, aufweisen. DE 2 305 413 offenbart, dass Filme aus diesen Copolymeren eine verbesserte Reißfestigkeit, eine verbesserte Beständigkeit gegen ungesättigte Polyesterharze sowie eine verringerte Brennbarkeit aufweisen. Aufgrund des Fehlens von hydrophilen Sulfonsäuregruppen weisen Polyarylethersulfon-Copolymere gemäß DE 2 305 413 eine geringe Hydrophilie auf.

DE 101 49 871 A1 offenbart eine thermoplastische Formmasse mit verbesserter Schmelzstabilität auf Basis von verzweigten Polyarylethersulfonen. Die verzweigten Polyarylethersulfone werden erhalten, indem in linearen Polyarylethersulfonen eine bestimmte Menge der difunktionellen Hydroxybausteine durch von 1,1,1-Tris(4-hydroxyphenyl)ethan abgeleiteten Einheiten ersetzt ist. Aufgrund des Fehlens hydrophiler funktioneller Gruppen weisen die Polyarylethersulfone eine geringe Hydrophilie auf.

Die in den zitierten Schriften offenbarten Polyarylethersulfone weisen entweder eine ausreichend hohe Hydrophilie bei unzureichender mechanischer Festigkeit oder eine ausreichende mechanische Festigkeit bei ungenügender Hydrophilie auf.

Aufgrund der guten Hydrolysebeständigkeit, begründet in der geringen Hydrophilie, werden Polyarylether seit vielen Jahren als Membranmaterialien verwendet. So beschreiben zum Beispiel S. Savariar et al., Desalination 144 (2002) 15 bis 20, die Verwendung von Polysulfon zur Herstellung von Dialysemembranen. Da Polysulfon relativ wenig Wasser absorbiert, wird bei der Herstellung solcher Dialysemembranen üblicherweise ein hydrophiles Polymer, wie beispielsweise Polyvinylpyrrolidon (PVP) als Additiv verwendet. Der Einsatz von Additiven bedeutet bei der Herstellung solcher Membranen einen weiteren kostenintensiven Verfahrensschritt.

Durch Funktionalisierung von Polyarylethern, beispielsweise mit Sulfonsäuregruppen, kann die Hydrophilie der Polyarylether ebenfalls signifikant erhöht werden. Solche Produkte sind beispielsweise als Membranen für Brennstoffzellen von Interesse.

Neben der Quellung und Leitfähigkeit ist für die Verwendung als Membranen in Brennstoffzellen auch die mechanische Festigkeit von Bedeutung, da beim Verspannen der Membrane in der Brennstoffzelle erhebliche Kräfte auf die Membrane einwirken. Die mechanische Festigkeit wird aber auch von der Wasseraufnahme beeinflusst, da das aufgenommene Wasser als Weichmacher wirkt, und die Festigkeit der Membrane reduziert. Es ist bislang nicht möglich gewesen, Membranen bereitzustellen, die eine hohe mechanische Festigkeit in Kombination mit einer hohen Hydrophilie aufweisen.

Aufgabe der vorliegenden Erfindung ist es, Polyarylether-Copolymere bereitzustellen, die neben einer hohen Hydrophilie auch eine hohe mechanische Festigkeit aufweisen.

Diese Aufgabe wird gelöst durch verzweigte Polyarylether-Copolymere, welche aus den Bausteinen der allgemeinen Formel I und II 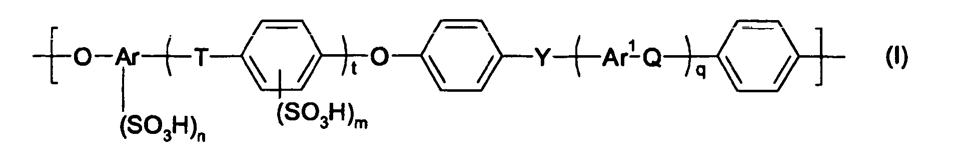 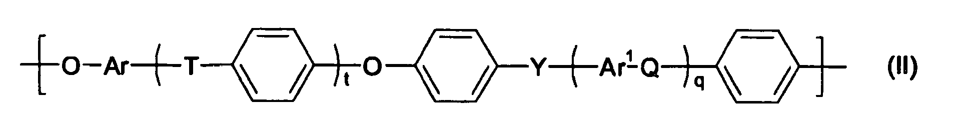 mit folgenden Bedeutungen
- t, q:: unabhängig voneinander 0, 1, 2 oder 3,
- m:: 0 bis 4,
- n:: 1 bis 4,
- Q, T, Y:: unabhängig voneinander jeweils eine chemische Bindung oder Gruppe, ausgewählt aus -O-, -S-, -SO₂-, S=O, C=O, -N=N-, -R^{a}C=CR^{b},-CR^{c}R^{d}-, wobei R^{a} und R^{b} unabhängig voneinander jeweils für ein Wasserstoffatom oder eine C₁-C₁₂-Alkylgruppe stehen und R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei R^{c} und R^{d}, wenn sie für eine Alkyl-, Alkoxy- oder Arylgruppe stehen, unabhängig voneinander mit Fluor- und/oder Chloratomen substituiert sein können oder wobei R^{c} und R^{d} zusammen mit dem C-Atom an das sie gebunden sind, eine C₃-C₁₂-Cycloalkygruppe bilden können, die mit einer oder mehreren C₁-C₆-Alkylgruppen substituiert sein kann, wobei wenigstens eines aus Q, T und Y von -O- verschieden ist, und wenigstens eines aus Q, T und Y für -SO₂- steht und
- Ar, Ar¹:: unabhängig voneinander C₆-C₁₈-Arylgruppe, wobei diese mit C₁-C₁₂-Alkyl-, C₆-C₁₈-Aryl-, C₁-C₁₂-Alkoxygruppen oder Halogenatomen substituiert sein kann,
aufgebaut sind, und zusätzlich 0,1 bis 10 Gew.%, bezogen auf das Gesamtgewicht des Copolymers, Bausteine B beinhalten, die abgeleitet sind von Verbindungen, die wenigstens drei Hydroxyfunktionalitäten aufweisen.

Die erfindungsgemäß bevorzugten Polyarylether-Copolymere sind aus wiederkehrenden Strukturelementen der Formel I bzw. II aufgebaut, wobei Ar, Ar¹, m, n, t, q, Q, T und Y die oben angegebenen Bedeutungen besitzen, und Bausteinen B, die abgeleitet sind von Verbindungen, die wenigstens drei Hydroxyfunktionalitäten aufweisen. Die in den Bausteinen B in monomerer Form vorliegenden wenigstens drei Hydroxyfunktionen werden bei Einbau in die Polymerkette in Etherfunktionen umgewandelt.

In den erfindungsgemäßen Polyarylether-Copolymeren können die Bausteine der Formel I und II und die Bausteine B in beliebiger Reihenfolge vorliegen. Sie können streng alternierend oder statistisch verteilt vorliegen.

Die erfindungsgemäßen Polyarylether-Copolymere entsprechen bevorzugt der allgemeinen Formel III, wobei t, q, m, n, Q, T, Y, Ar und Ar¹ die oben genannten Bedeutungen haben und p 0 bis 4 bedeutet.

B bedeutet Bausteine B, die von Verbindungen abgeleitet sind, die wenigstens drei Hydroxyfunktionalitäten aufweisen und die gegebenenfalls sulfoniert sein können.

x, y, und z beschreiben die Anzahl der einzelnen Blöcke der allgemeinen Formeln I, II und B, wobei x + y + z = 1 ist und x 0,049 bis 0,999, bevorzugt 0,095 bis 0,945, besonders bevorzugt 0,1425 bis 0,9425, y 0 bis 0,95, bevorzugt 0,05 bis 0,9, besonders bevorzugt 0,05 bis 0,85 und z 0,001 bis 0,1, bevorzugt 0,005 bis 0,05, besonders bevorzugt 0,0075 bis 0,03 bedeuten.

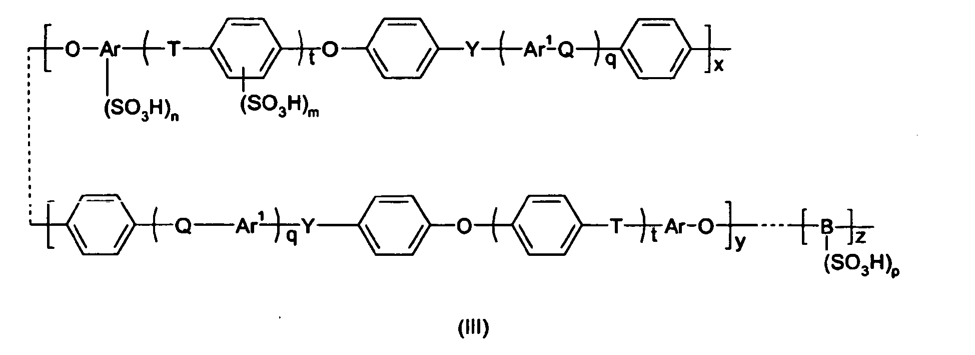

Die in dem Copolymer der allgemeinen Formel III vorliegenden Blöcke der allgemeinen Formel I, II oder B können statistisch verteilt oder streng alternierend vorliegen.

In einer bevorzugten Ausführungsform liegen in den erfindungsgemäßen Polyarylether-Copolymeren Bausteine der allgemeinen Formeln I und II jeweils zu 5 bis 95 mol-% vor, wobei die Summe der Anteile der Bausteine der allgemeinen Formeln I und II und B 100 mol-% ergibt.

In einer bevorzugten Ausführungsform bedeuten Q, T und Y unabhängig voneinander -O- oder -SO₂-.

Erfindungsgemäß verwendbare Alkylreste umfassen geradkettige oder verzweigte, gesättigte Kohlenstoffketten mit bis zu 12 Kohlenstoffatomen. Beispielsweise können folgende Reste genannt werden: C₁-C₆-Alkylrest, wie Methyl, Ethyl, n-Propyl, i-Propyl, n-Butyl, sec.-Butyl, 2- oder 3-Methyl-pentyl und längerkettige Reste wie unverzweigtes Heptyl, Octyl, Nonyl, Decyl, Undecyl, Lauryl und die ein- oder mehrfach verzweigten Analoga davon. Der Alkylteil von erfindungsgemäß einsetzbaren Alkoxygruppen ist wie oben angegeben definiert. Erfindungsgemäß verwendbare Cycloalkylreste umfassen insbesondere C₃-C₁₂-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclopentylethyl, -propyl, -butyl, - pentyl, -hexyl, Cyclohexylmethyl, -dimethyl, -trimethyl und dergleichen.

Bevorzugt bedeutet Ar¹ unsubstituiertes C₆-C₁₂-Aryl. Beispiele für erfindungsgemäß einsetzbare C₆-C₁₈-Arylengruppen Ar und Ar¹ sind Phenylengruppen, wie 1,2-, 1,3- und 1,4-Phenylen, Naphthylengruppen, wie beispielsweise 1,6-, 1,7-, 2,6- und 2,7-Naphthylen, sowie die von Anthracen, Phenanthren und Naphthacen abgeleiteten Brückengruppen.

In einer besonders bevorzugten Ausführungsform entsprechen die erfindungsgemäßen Polyarylether-Copolymere der allgemeinen Formel IV, wobei B, Ar, n, p, x, y und z die zuvor genannten Bedeutungen haben und die einzelnen Blöcke alternierend oder statistisch verteilt vorliegen.

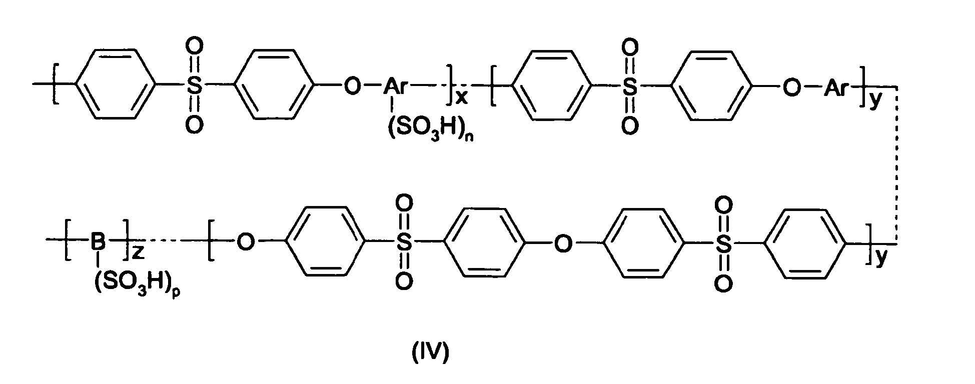

Zur Herstellung der erfindungsgemäßen Polyarylether-Copolymere werden als Monomere die entsprechenden Dihydroxy- bzw. Dihalogen-Verbindungen, bevorzugt die Chlor- oder Fluorverbindungen, eingesetzt. Beispielhaft ist die Umsetzung von Dichlordiphenylsulfon mit Dihydroxydiphenylsulfon und Hydrochinon in den entsprechenden Mengenverhältnissen in einer Polykondensationsreaktion bei gleichzeitiger Freisetzung von Chlorwasserstoff genannt.

Das molare Verhältnis von Monomeren mit Hydroxyfunktionalitäten zu Monomeren mit Halogenfunktionalitäten liegt bei 0,9 zu 1,1 bis 1,1 zu 0,9, bevorzugt bei 0,95 zu 1,05 bis 1,05 zu 0,95, besonders bevorzugt bei 1 zu 1. Liegen verschiedene Monomere mit Hydroxyfunktionalitäten oder mit Halogenfunktionalitäten vor, so werden jeweils die molaren Mengen in Summe betrachtet.

Besonders geeignet ist die Umsetzung der Monomere in aprotischen polaren Lösungsmitteln in Gegenwart von wasserfreiem Alkalicarbonat, beispielsweise Natrium-, Kalium-, Calciumcarbonat oder Mischungen davon. Eine besonders bevorzugte Kombination ist N-Methylpyrrolidon als Lösungsmittel und Kaliumcarbonat als Base.

Die Umsetzung der geeigneten Monomere wird bei einer Temperatur von 80 bis 250 °C, bevorzugt 100 bis 220 °C durchgeführt. Die Umsetzung wird für 2 bis 12 h, bevorzugt 3 bis 8 h durchgeführt. Nach Beendigung der Polykondensationsreaktion kann dem Reaktionsgemisch ein monofunktionelles Alkyl- oder Arylhalogenid, beispielsweise C₁-C₆-Alkylchlorid, -bromid oder -iodid, bevorzugt Methylchlorid, oder Benzylchlorid, -bromid oder -iodid oder Mischungen davon, zugesetzt werden. Diese Verbindungen reagieren mit den Hydroxygruppen an den Enden der Makromoleküle und bilden somit die Anfangs- bzw. Endstücke der Makromoleküle.

Die Umsetzung in der Schmelze ist ebenfalls bevorzugt. Die Polykondensation in der Schmelze wird bei einer Temperatur von 140 bis 290 °C, bevorzugt 150 bis 280 °C durchgeführt.

Beispiele für in den erfindungsgemäßen Polyarylethern vorliegende Bausteine der allgemeinen Formel II sind solche, die mindestens eine der folgenden wiederkehrenden Struktureinheiten IIa bis IIo enthalten:

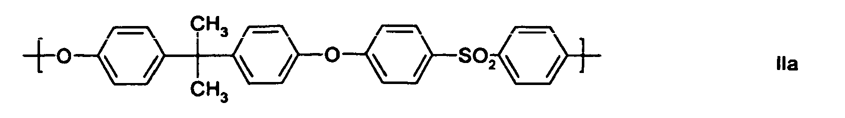

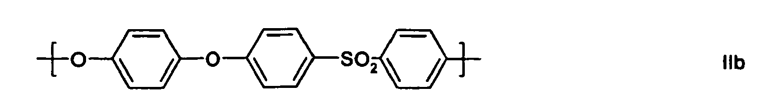

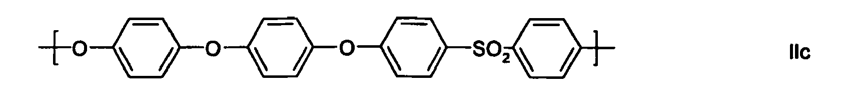

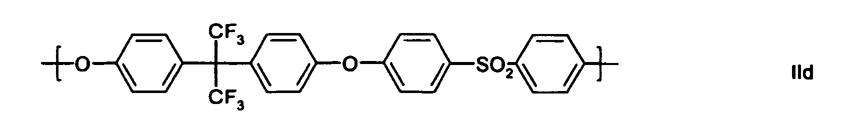

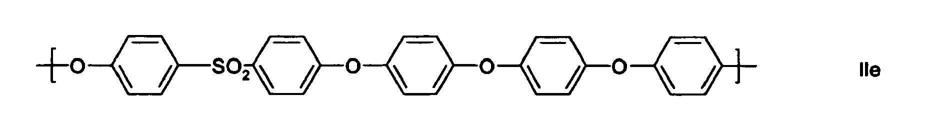

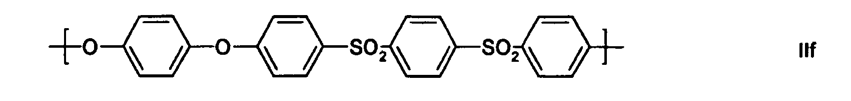

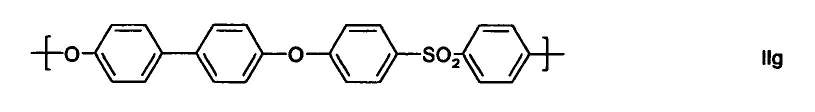

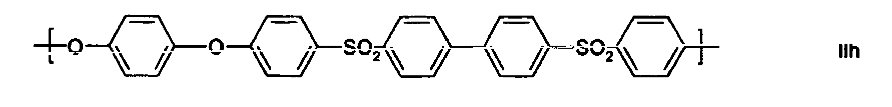

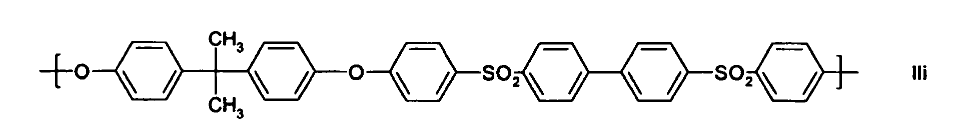

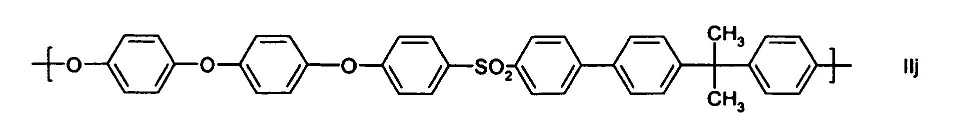

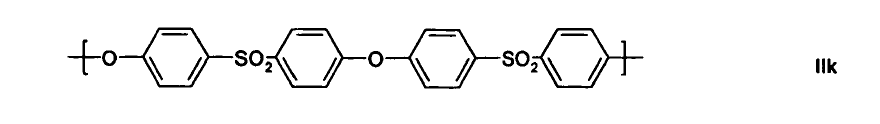

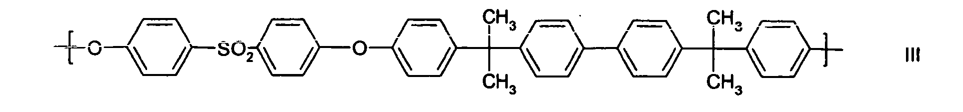

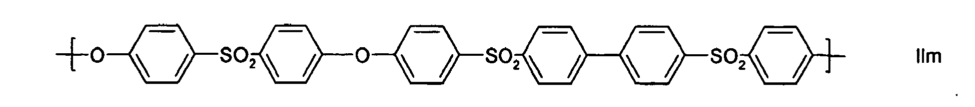

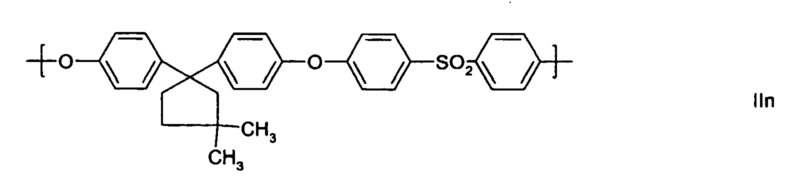

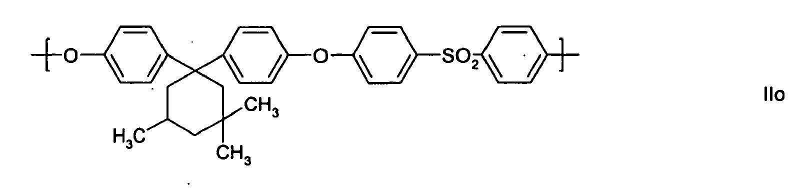

Zusätzlich zu den bevorzugt vorliegenden Bausteinen 11a bis 11o sind auch solche Bausteine bevorzugt, in denen eine oder mehrere 1,4-Dihydroxyphenyl-Einheiten durch Resorcin- oder Di-hydroxynaphthalin-Einheiten ersetzt sind.

Die Polyarylether gemäß der vorliegenden Erfindung können auch Co- oder Blockcopolymere sein, in denen Polyarylether-Segmente und Segmente von anderen thermoplastischen Polymeren, wie Polyamiden, Polyestern, aromatischen Polycarbonaten, Polyestercarbonaten, Polysiloxanen, Polyimiden oder Polyetherimiden vorliegen. Die Molekulargewichte (Zahlenmittel) der Blöcke bzw. der Pfropfarme in den Copolymeren betragen in der Regel 1000 bis 30000 g/mol.

Die Blöcke unterschiedlicher Struktur können in den Copolymeren alternierend oder statistisch angeordnet sein. Der Gewichtsanteil der Polyarylether in den Co- oder Blockcopolymeren beträgt im Allgemeinen mindestens 10 Gew.-%. Der Gewichtsanteil der Polyarylether kann bis zu 97 Gew.-% betragen. Bevorzugt werden Co- oder Blockcopolymere mit einem Gewichtsanteil an Polyarylethern mit bis zu 90 Gew.-%. Besonders bevorzugt werden Co- oder Blockcopolymere mit 20 bis 80 Gew.-% Polyarylethern.

In den erfindungsgemäßen verzweigten Polyarylether-Copolymeren liegen auch Bausteine der allgemeinen Formel I vor. Diese Bausteine der allgemeinen Formel I entsprechen bis auf das Vorliegen von 1 bis 4 Sulfonsäuregruppierungen (-SO₃H) an der Struktureinheit Ar den Bausteinen der allgemeinen Formel II.

Ar ist in einer bevorzugten Ausführungsform abgeleitet von einer elektronenreichen, leicht elektrophil angreifbaren aromatischen Substanz, bevorzugt ausgewählt aus der Gruppe bestehend aus Hydrochinon, Resorcin, Dihydroxynaphthalin, beispielsweise 2,7-Dihydroxynaphthalin, und 4,4'-Bisphenol.

In den erfindungsgemäßen verzweigten Polyarylether-Copolymeren können Bausteine der allgemeinen Formeln I und II vorliegen, die abgesehen vom Vorhandensein der Sulfongruppen, identisch sind. Es können aber auch Bausteine der allgemeinen Formeln I und II vorliegen, die sich zusätzlich durch den Aufbau der Polymerhauptkette, d.h. in den Bedeutungen für t, q, Q, T, Y, Ar und/oder Ar¹, unterscheiden.

In einer bevorzugten Ausführungsform liegen, neben gegebenenfalls weiteren erfindungsgemäß einsetzbaren Bausteinen, in den Polyarylethern Bausteine der allgemeinen Formeln I und II vor, die im Aufbau der Polymerhauptkette identisch sind, d.h. t, q, Q, T, Y, Ar und Ar¹ haben in den Bausteinen der Formel I und der Formel II die gleichen Bedeutungen. In diesen bevorzugten Polyarylether-Copolymeren sind somit identische Bausteine vorhanden, die teilweise an Ar sulfoniert (Formel I) und teilweise an Ar nicht sulfoniert (Formel II) sind. Der Sulfonierungsgrad beträgt 20 bis 300%, bevorzugt 30 bis 150%. Werte über 100% bedeuten, dass die aromatischen Bausteine mehrfach sulfoniert sind.

Die Polyarylether-Copolymere gemäß der vorliegenden Erfindung sind verzweigt. Die Verzweigung der Copolymer-Hauptketten wird erfindungsgemäß erreicht, indem zusätzlich zu den genannten Bausteinen der allgemeinen Formel I und II 0,1 bis 10 Gew.-%, bevorzugt 0,5 bis 7,5 Gew.-%, besonders bevorzugt 1,0 bis 6,0 Gew.-%, ganz besonders bevorzugt 1,5 bis 2,5 Gew.-%, jeweils bezogen auf das Gesamtgewicht des Copolymers, Bausteine B eingefügt werden, die wenigstens 3 Hydroxyfunktionalitäten aufweisen. Diese zusätzlichen Bausteine B werden bei der Polykondensation zur Herstellung der Polyarylether-Copolymere zugesetzt und werden wie die DiHydroxyverbindungen in die Polymerhauptkette eingebaut. Dadurch, dass der zusätzliche Baustein B noch wenigstens eine freie Hydroxyfunktion aufweist, kommt es durch Kondensation eines geeigneten Monomers mit dieser wenigstens einen Hydroxyfunktion zu wenigstens einer Verzweigung der Polymerhauptkette. Die erfindungsgemäß einsetzbaren Bausteine B können in monomerer Form auch vier Hydroxyfunktionen aufweisen, so dass nach Einbau in die Polymerhauptkette noch zwei Hydroxyfunktionen für eine Verzweigung der Hauptkette zur Verfügung stehen.

Der Grad der Verzweigung der erfindungsgemäßen Polyarylether-Copolymere kann durch die Menge der in monomere Form wenigstens drei Hydroxyfunktionen aufweisenden Bausteine B, und durch die Anzahl der vorliegenden Hydroxyfunktionen, drei bis fünf, eingestellt werden.

Als Verzweigungskomponenten vom Typ der aromatischen Bausteine B in monomerer Form, die wenigstens drei Hydrox yfunktionalitäten aufweisen, seien beispielhaft genannt:

Phloroglucin, 4,6-Dimethyl-2,4,6-Tri-(4-hydroxyphenyl)-hepten-2 (= trimeres Isopropenylphenol), 4,6-Dimethyl-2,4,6-Tri-(4-hydroxyphenyl)-heptan (= hydriertes primäres Isopropenylphenol), 1,3,5-Tri-(4-hydroxyphenyl)-benzol, 1,1,1-Tri-(4-hydroxy-phenyl)-ethan und -propan, Tetra-(4-hydroxyphenyl)-methan, 1,4-bis-[(4',4"-dihydroxy-triphenyl)-methyl]-benzol und 2,2-bis-[4,4'-bis-(4-hydroxyphenyl)-cyclohexyl]-propan.

Besonders geeignet sind solche drei- oder mehr als dreiwertigen Phenole, die durch Umsetzung von p-alkylsubstituierten Monophenolen an unsubstituierten o-Stellungen mit Formaldehyd oder Formaldehyd liefernden Verbindungen herstellbar sind, wie beispielsweise das Trisphenol aus p-Kresol und Formaldehyd, das 2-6-bis-(2'-hydroxy-5'-methyl-benzyl)-4-methyl-phenol. Ferner seien genannt: 2,6-bis-(2'-hydroxy-5'-isopropyl-benzyl)-4-isopropenyl-phenol und Bis-[2-hydroxy-3-(2'-hydroxy-5'-methylbenzyl-5-methyl-phenyl]-methan.

Als weitere drei- bzw. mehr als dreiwertige Phenole sind solche geeignet, die zusätzlich zu den phenolischen Hydroxylgruppen Halogenatome aufweisen, zum Beispiel die halogenhaltigen Trihydroxyarylether der Formel (V) 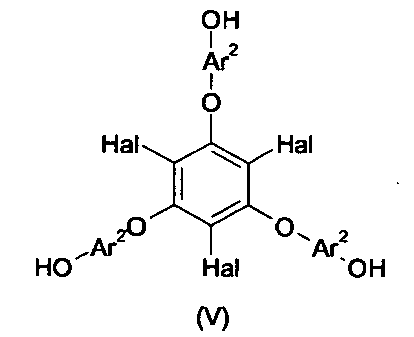 worin Ar² einen ein- oder mehrkernigen zweiwertigen aromatischen Rest und Hal Chlor oder Brom bedeuten. Beispiele für solche Verbindungen sind:
1,3,5-Tris-(4-Hydroxy-Phenoxy)-2,4,6-trichlorbenzol,
1,3,5-Tris-[4-(4-hydroxy-phenyl-isopropyl)-phenoxy]-2,4,6-trichlorbenzol,
1,3,5-Tris-[4-(4-hydroxy)-biphenoxy]-2,4,6-trichlorbenzol,
1,3,5- Tris-[4-(4-hydroxy-phenylsulfonyl)-phenoxy]-2,4,6-trichlorbenzol und
1,3,5-Tris-[4-(4-hydroxy-phenyl-isopropyl)-phenoxy]-2,4,6-tribrombenzol.

Die Herstellung dieser Verbindungen ist in der deutschen Offenlegungsschrift 1 768 620 beschrieben.

In einer bevorzugten Ausführungsform sind diese Bausteine, die wenigstens 3 Hydroxyfunktionalitäten aufweisen, abgeleitet von 1,1,1-Tris(4-hydroxyphenyl)ethan (VI)

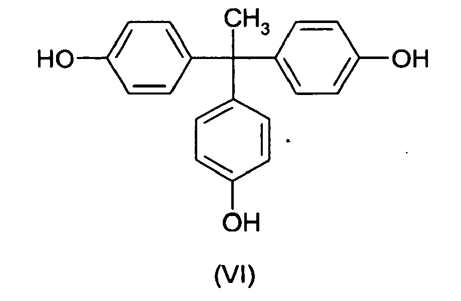

Die vorliegende Erfindung betrifft auch ein Verfahren zur Herstellung der erfindungsgemäßen Polyarylether-Copolymeren durch Umsetzung von Polyarylether-Copolymeren bestehend aus Bausteinen der allgemeinen Formel II und B mit Schwefelsäure.

Die erfindungsgemäß einsetzbare Schwefelsäure wird als 50 - 98%ige Lösung in Wasser eingesetzt. Die Umsetzung wird durchgeführt, indem das zu sulfonierende Polyarylether-Copolymer in einer wässrigen Lösung von Schwefelsäure bei einer Temperatur von 10 bis 70 °C, bevorzugt 15 bis 50 °C, besonders bevorzugt 20 bis 30 °C dispergiert wird. Diese Dispersion wird 1 bis 12 h, bevorzugt 2 bis 10 h, besonders bevorzugt 3 bis 6 h gerührt. Dabei löst sich das Copolymer in der wässrigen Lösung auf. Nach der Umsetzung wird das Produkt ausgefällt, bevorzugt in Wasser oder einem Gemisch aus Wasser und NMP. Die Isolierung der erfindungsgemäßen Polyarylether-Copolymere erfolgt nach dem Fachmann bekannten Methoden, beispielsweise Dekantieren, Abfiltrieren, Zentrifugieren. Nach der Isolierung wird das erhaltene Produkt sorgfältig mit Wasser neutral gewaschen.

Die Reinigung der erfindungsgemäßen Polyarylether-Copolymere erfolgt ebenfalls nach dem Fachmann bekannten Methoden, beispielsweise Umkristallisieren oder Waschen mit geeigneten Lösungsmitteln, in denen die erfindungsgemäßen Polyarylether-Copolymere bevorzugt größtenteils unlöslich sind.

Die erfindungsgemäßen Polyarylether-Copolymere weisen gewichtsmittlere Molekulargewichte Mw von 10000 bis 150000 g/mol, bevorzugt von 15000 bis 120000 g/mol, besonders bevorzugt von 18000 bis 100000 g/mol auf.

Die erfindungsgemäßen Polyarylether-Copolymere weisen Viskositätszahlen, gemessen in 1%-iger Lösung in N-Methylpyrrolidon bei 25 °C, von 30 bis 200 ml/g, bevorzugt von 35 bis 190 ml/g, besonders bevorzugt von 40 bis 180 ml/g auf.

Die vorliegende Erfindung betrifft auch Polymerblends, enthaltend wenigstens ein findungsgemäßes Polyarylether-Copolymer und wenigstens ein Polymer ausgewählt aus der Gruppe bestehend aus Polyethersulfonen, Polysulfonen, Polyetherketonen, Polyetherimiden, Polyimiden, Polybenzimidazolen, Polyamidimiden und Polyamiden.

Besonders bevorzugte Blendpartner sind: Polyethersulfon, beispielsweise Ultrason^{®} E (BASF Aktiengesellschaft), Polysulfon, beispielsweise Ultrason^{®} S (BASF Aktiengesellschaft), Polyetherketon, beispielsweise Victrex^{®} PEEK (Victrex Ltd.), Polyetherimid, beispielsweise Ultem^{®} (GE Plastics). Weiterhin kommen auch hydrophile Polymere, wie beispielsweise Polyvinylpyrrolidon, Polyethylenglykol, Polyethylenimin in Frage.

Die vorliegende Erfindung betrifft auch die Herstellung der erfindungsgemäßen Polymerblends durch Mischen der erfindungsgemäßen Polyarylether-Copolymere in Lösung mit dem oder den weiteren Polymeren, ebenfalls in Lösung. Dazu werden die Polyarylether-Copolymere und die entsprechenden Polymere durch Auflösen in einem gemeinsamen Medium, wobei vor allem dipolar aprotische Lösungsmittel wie DMF, DMAC, NMP, DMSO, Sulfolan, N-Methylcaprolactam, Harnstoffe oder deren Mischungen geeignet sind, gemischt. Durch Entfernen des Lösungsmittels wird das innig vermischte Polymerblend erhalten.

Es ist des Weiteren auch möglich, dass die entsprechenden Polymerblends durch Ausfällen aus der gemeinsamen Lösung isoliert werden. Die weitere Aufarbeitung und Reinigung dieser Polymerblends wird nach dem Fachmann bekannten Methoden, beispielsweise Abdekantieren, Abfiltrieren oder Zentrifugieren und gegebenenfalls Waschen und/oder Trocknen, durchgeführt.

Durch die hohe mechanische Festigkeit und eine hohe Hydrophilie sind die erfindungsgemäßen Polyarylether-Copolymere besonders geeignet, um daraus Membranen herzustellen, die bei der Produktion, der Weiterverarbeitung und/oder dem Einsatz starken mechanischen und/oder thermischen Bedingungen unterworfen werden. Beispielhaft ist die Herstellung einer Membrane für eine Brennstoffzelle genannt. Bei der Herstellung einer Brennstoffzelle muss die Membrane unter Einwirken erheblicher Kräfte verspannt werden. Dabei darf sie nicht reißen, und darf auch keine Beeinträchtigungen erleiden, die beim späteren Betrieb der Brennstoffzelle zu Schäden führen können. Weitere Beispiele, in denen das erfindungsgemäße Polyarylether-Copolymer eingesetzt werden kann, sind Ultrafiltrationsmembranen oder Membranen zur Gastrennung.

Die vorliegende Erfindung betrifft auch die Verwendung eines erfindungsgemäßen Polyarylether-Copolymers bei der Herstellung von Membranen, bevorzugt von Membranen für Brennstoffzellen, Ultrafiltrationsmembranen oder Membranen zur Gastrennung.

Die vorliegende Erfindung betrifft des Weiteren Membranen, bevorzugt von Brennstoffzellen, zur Ultrafiltration oder zur Trennung von Gasen, die wenigstens ein erfindungsgemäßes Polyarylether-Copolymer enthalten.

Die folgenden Beispiele erläutern die Erfindung näher, ohne sie einzuschränken.

### Beispiele

Die Viskositätszahl der Polyarylether wird in 1 %-iger Lösung von N-Methylpyrrolidon bei 25 °C bestimmt.

Der Sulfonierungsgrad wird durch Elementaranalyse ermittelt, angegeben wird der Anteil sulfonierter Einheiten bezogen auf das Comonomer in %. Dabei bedeutet ein Wert größer 100%, dass die Einheit mehrfach sulfoniert ist.

Die sulfonierten Produkte wurden in DMF gelöst und auf eine Glasplatte gegeben. Bei 80 °C wurde das Lösungsmittel iangsam entfernt, wobei Polymermembranen einer Dicke zwischen 0,2 und 0,3 mm und einem Durchmesser von ca. 10 cm erhalten wurden.

Die Wasseraufnahme wird gravimetrisch an Membranen einer Dicke von 100 bis 500 µm ermittelt. Dazu werden Membranstücke tariert und für 7 Tage in VE-Wasser gelagert. Nach jeweils 24 h wird die Wasseraufnahme bestimmt. Nach Beendigung der Lagerung wird die Membran bis zu Gewichtskonstanz getrocknet. Für die Berechnung des Quellungsgrads wird das nach Trocknung erhaltene Endgewicht der Membran verwendet.

Der Quellungsgrad ergibt sich zu: Q = (Gewicht_{feucht}/Gewicht_{trocken})*100 %

Von jedem Material werden 3 Proben gelagert und der Mittelwert aus den 3 Einzelwerten bestimmt. Die Festigkeit der gequollenen Membranen wird durch Zugversuche nach ISO an Filmen ermittelt. Es werden dazu jeweils 5 Probekörper ("S3") aus einem Material ausgestanzt. Anschließend werden die Proben nochmals 24 h in VE-Wasser gelagert, abgetupft und sofort vermessen.

### Herstellung der Polyarylether

### Polyarylether A1 - A5

Die Polyarylether A1 - A5 werden durch nucleophile Polykondensation erhalten. Dazu werden 1 mol (287,08 g) Dichlordiphenylsulfon (DCDPS), (1-X-0,015 mol) Dihydroxydiphenylsulfon, X mol Hydrochinon (HQ), 0,01 mol (9,18 g) 1,1,1,-Tris-(4-hydroxyphenyl)ethan unter Einwirkung von 143,76 g Kaliumcarbonat in 1000 ml NMP umgesetzt. Diese Mischung wird für 6 Stunden bei 195 °C gehalten. Nach Abkühlung auf 120 °C wird für 1 Stunde Methylchlorid in die Lösung eingeleitet. Danach wird der Ansatz durch Zugabe von 1000 ml NMP verdünnt, die festen Bestandteile werden durch Filtration abgetrennt und das Polymere durch Fällung in NMP/Wasser 1/9 isoliert. Nach sorgfältigem Waschen mit Wasser wird das Produkt im Vakuum bei 120 °C für 12 h getrocknet. Die Viskositätszahl der Produkte, die Zusammensetzung und die Glastemperatur der Produkte ist in Tabelle 1 aufgeführt.

Produkt AV wurde ohne Zusatz von 1,1,1,-Tris-(4-hydroxyphenyl)ethan erhalten.

**Tabelle 1**

| **Produkt** | **X mol HQ** | **VZ [ml/g]** | **DCDPS/HQ-Einheiten [Mol-%]** | **Tg [°C]** |
|---|---|---|---|---|
| **A1** | 0,05 | 75,6 | 5 | 228 |
| **A2** | 0,1 | 78,7 | 11 | 226 |
| **A3** | 0,2 | 76,5 | 20 | 224 |
| **A4** | 0,35 | 74,0 | 36 | 222 |
| **A5** | 0,5 | 79,1 | 51 | 221 |
| **AVI** | 0,5 | 56,1 | 50 | 219 |

### Polyarylether A6 - A10

Die Polyarylether A6 - A10 wurden durch nucleophile Polykondensation erhalten. Dazu wurden 1 mol (287,08 g) Dichlordiphenylsulfon, (1-X-0,015 mol) Dihydroxydiphenylsulfon, X mol 2,7-Di-hydroxynaphthalin (DHN), 0,01 mol (9,18 g) 1,1,1-Tris-(4-hydroxyphenyl)ethan unter Einwirkung von 143,76 g Kaliumcarbonat in 1000 ml NMP umgesetzt. Diese Mischung wird 6 Stunden bei 195 °C gehalten. Nach Abkühlung auf 120 °C wird für 1 Stunde Methylchlorid in die Lösung eingeleitet. Danach wird der Ansatz durch Zugabe von 1000 ml NMP verdünnt, die festen Bestandteile werden durch Filtration angetrennt und das Polymere durch Fällung in NMP/Wasser 1/9 isoliert. Nach sorgfältigem Waschen mit Wasser wird das Produkt im Vakuum bei 120 °C für 12 h getrocknet. Die Viskositätszahl der Produkte, die Zusammensetzung und die Glastemperatur der Produkte ist in Tabelle 2 aufgeführt.

Produkt AV2 wurde ohne Zusatz von 1,1,1-Tris-(4-hydroxyphenyl)ethan erhalten.

**Tabelle 2**

| **Produkt** | **X mol DHN** | **VZ [ml/g]** | **DCDPS/DHN-Einheiten [Mol-%]** | **Tg [°C]** |
|---|---|---|---|---|
| A6 | 0,05 | 70,6 | 5 | 229 |
| **A7** | **0,1** | **71,7** | **11** | **228** |
| A8 | 0,2 | 72,5 | 21 | 226 |
| A9 | 0,35 | 71,9 | 34 | 224 |
| **A10** | **0,5** | **69,1** | **50** | **223** |
| **AV2** | **0,5** | **52,1** | **50** | **221** |

### Herstellung der erfindungsgemäßen Produkte

Die Komponenten A wurden anschließend sulfoniert. Dazu wurden 10 g Polymer in 80 ml konz. Schwefelsäure (97 %) bei 25 °C dispergiert. Innerhalb der gewählten Reaktionszeit von 4 h lösten sich alle Produkte vollständig auf. Die Polymere wurden durch Fällung in 500 ml Wasser isoliert und abfiltriert. Die Produkte wurden auf der Fritte 5 mal mit jeweils 200 ml Wasser gewaschen, trocken gesaugt und anschließend 24 h bei 100 °C im Vakuum getrocknet. Der Sulfonierungsgrad der erhaltenen Proben wurde über Elementaranalyse (Zunahme des S-Anteils) bestimmt. Die Viskositätszahl der Produkte wurde ebenfalls in NMP bestimmt.

Ebenfalls sulfoniert wurde ein Ultrason E 6020, mit einer VZ von 85,4 ml/g. Die Eigenschaften der erhaltenen Produkte sind in Tabelle 3 zusammengefasst.

**Tabelle 3**

| **Produkt** | **VZ [ml/g]** | **Sulfonierungsgrad [%]** | **Quellgrad [%]** | **Zugfestigkeit [MPa]** | **Reissdehnung [%]** |
|---|---|---|---|---|---|
| s-A1 | 79,3 | 46 | 2,9 | 68,2 | 10,1 |
| s-A2 | 81,2 | 67 | 4,1 | 66,1 | 12,4 |
| s-A3 | 84,2 | 73 | 5,9 | 61,4 | 15,7 |
| s-A4 | 86,2 | 78 | 8,1 | 54,4 | 16,7 |
| s-A5 | 89,1 | 74 | 9,1 | 50,6 | 19,1 |
| s-AV1 | 62,1 | 69 | 8,4 | 43,6 | 8,9 |
| s-U-son E | 86,2 | 0 | 2,3 | 69,9 | 8,3 |
| s-A6 | 74,1 | 146 | 4,1 | 62,1 | 9,7 |
| s-A9 | 83,4 | 143 | 15,2 | 45,1 | 14,7 |
| s-AV2 | 59,1 | 136 | 14,1 | 37,1 | 6,8 |

Die erfindungsgemäßen Produkte weisen eine hohe Wasseraufnahme und eine gute Zugfestigkeit auf. Außerdem ist die Reißdehnung im feuchten Zustand bei den erfindungsgemäßen verzweigten Produkten signifikant höher als bei den linearen Produkten. Überraschenderweise weisen die erfindungsgemäßen Produkte auch deutlich höhere Wasseraufnahme auf.

## Patentansprüche

1. Verzweigte Polyarylether-Copolymere, **dadurch gekennzeichnet, dass** sie aus **Bausteinen der allgemeinen Formeln I und II** 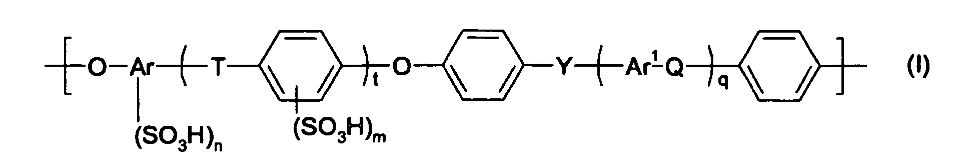 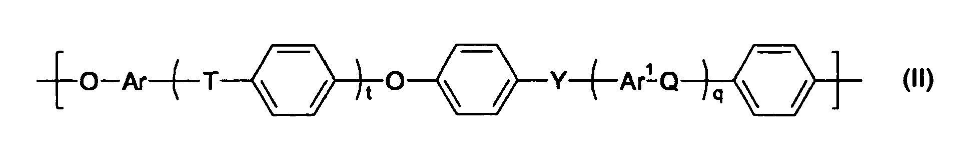 mit folgenden Bedeutungen
t, q: unabhängig voneinander 0, 1, 2 oder 3,
m: 0 bis 4,
n: 1 bis 4,
Q, T, Y: unabhängig voneinander jeweils eine chemische Bindung oder Gruppe, ausgewählt aus -O-, -S-, -SO₂-, S=O, C=O, -N=N-, -R^{a}C=CR^{b},-CR^{c}R^{d}-, wobei R^{a} und R^{b} unabhängig voneinander jeweils für ein Wasserstoffatom oder ein C₁-C₁₂-Alkylgruppe stehen und R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei R^{c} und R^{d}, wenn sie für eine Alkyl-, Alkoxy- oder Arylgruppe stehen, unabhängig voneinander mit Fluor- und/oder Chloratomen substituiert sein können oder wobei R^{c} und R^{d} zusammen mit dem C-Atom an das sie gebunden sind, eine C₃-C₁₂-Cycloalkygruppe bilden können, die mit einer oder mehreren C₁-C₆-Alkylgruppen substituiert sein kann, wobei wenigstens eines aus Q, T und Y von -O- verschieden ist, und wenigstens eines aus Q, T und Y für -SO₂- steht und
Ar, Ar¹: unabhängig voneinander C₆-C₁₈-Arylgruppe, wobei diese mit C₁-C₁₂-Alkyl-, C₆-C₁₈-Aryl-, C₁-C₁₂-Alkoxygruppen oder Halogenatomen substituiert sein kann,
aufgebaut sind, und zusätzlich 0,1 bis 10 Gew.%, bezogen auf das Gesamtgewicht des Copolymers, Bausteine B (Verzweigungskomponente) beinhalten, die abgeleitet sind von Verbindungen, die wenigstens drei Hydroxyfunktionalitäten aufweisen, wobei die Hydroxylfunktionen bei Einbau in die Polymerkette in Etherfunktionen umgewandelt werden.

2. Polyarylether-Copolymer nach Anspruch 1, **dadurch gekennzeichnet, dass** Q, T und Y unabhängig voneinander -O- oder -SO₂- bedeutet.

3. Polyarylether-Copolymer nach Anspruch 1 oder 2, **dadurch gekennzeichnet, dass** Ar ausgewählt ist aus der Gruppe bestehend aus Hydrochinon, Resorcin, Di-hydroxynaphthalin und 4,4'-Bisphenol.

4. Polyarylether-Copolymer nach einem der Ansprüche 1 bis 3, **dadurch gekennzeichnet, dass** Ar¹ unsubstituiertes C₆-C₁₂-Aryl bedeutet.

5. Polyarylether-Copolymer nach einem der Ansprüche 1 bis 4, **dadurch gekennzeichnet, dass** Bausteine der allgemeinen Formeln I und II jeweils zu 5 bis 95 mol-% vorliegen, wobei die Summe der Anteile der Bausteine der allgemeinen Formeln I und II und B 100 mol-% ergibt.

6. Verfahren zur Herstellung von Polyarylether-Copolymeren gemäß einem der Ansprüche 1 bis 5 durch Umsetzung von Polyarylether-Copolymeren aufgebaut aus Bausteinen der allgemeinen Formel 11 und B mit Schwefelsäure.

7. Polymerblends, enthaltend wenigstens ein Polyarylether-Copolymer gemäß einem der Ansprüche 1 bis 5 und wenigstens ein Polymer ausgewählt aus der Gruppe bestehend aus Polyethersulfonen, Polysulfonen, Polyetherketonen, Polyetherimiden, Polyimiden, Polybenzimidazolen, Polyamidimiden und Polyamiden.

8. Verfahren zur Herstellung der Polymerblends wie in Anspruch 7 definiert, **dadurch gekennzeichnet, dass** Polyarylether-Copolymere gemäß einem der Ansprüche 1 bis 5 in Lösung mit dem oder den weiteren Polymeren, ebenfalls in Lösung, gemischt werden.

9. Verwendung eines Polyarylether-Copolymers gemäß einem der Ansprüche 1 bis 5 bei der Herstellung von Membranen.

10. Membranen, enthaltend wenigstens ein Polyarylether-Copolymer gemäß einem der Ansprüche 1 bis 5.

## Claims

1. A branched polyaryl ether copolymer which is made up of the building blocks of the general formulae I and II 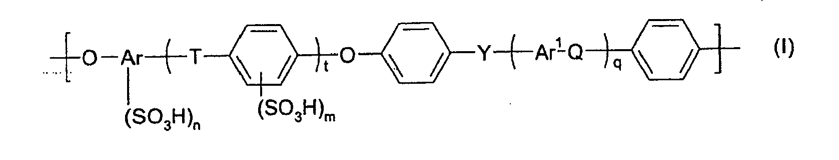 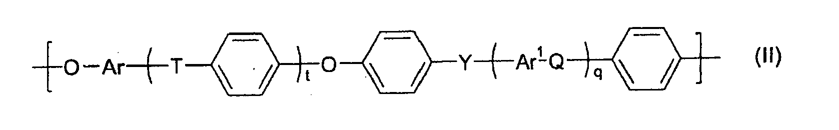 where
t, q: independently of one another, 0, 1, 2 or 3,
m: from 0 to 4,
n: from 1 to 4,
Q, T, Y: independently of one another, each a chemical bond or group selected from among -O-, -S-, -SO₂-, S=O, C=O, -N=N-, -R^{a}C=CR^{b}, -CR^{c}R^{d}-, where R^{a} and R^{b} are each, independently of one another, a hydrogen atom or a C₁-C₁₂-alkyl group and R^{c} and R^{d} are each, independently of one another, a hydrogen atom or a C₁-C₁₂-alkyl, C₁-C₁₂-alkoxy or C₆-C₁₈-aryl group, where alkyl, alkoxy or aryl groups R^{c} and R^{d} may be substituted, independently of one another, by fluorine and/or chlorine atoms or R^{c} and R^{d} together with the carbon atom to which they are bound can form a C₃-C₁₂-cycloalkyl group which may be substituted by one or more C₁-C₆-alkyl groups, with at least one of Q, T and Y being different from -O- and at least one of Q, T and Y being -SO₂- and
Ar, Ar¹: independently of one another, a C₆-C₁₈-aryl group which may be substituted by C₁-C₁₂-alkyl, C₆-C₁₈-aryl or C₁-C₁₂-alkoxy groups or halogen atoms,
and, in addition, comprises from 0.1 to 10% by weight, based on the total weight of the copolymer, of building blocks B (branching component) which are derived from compounds having at least three hydroxy functions, with the hydroxy functions being converted into ether functions on incorporation into the polymer chain.

2. The polyaryl ether copolymer according to claim 1, wherein Q, T and Y are each, independently of one another, -O- or -SO₂-.

3. The polyaryl ether copolymer according to claim 1 or 2, wherein Ar is selected from the group consisting of hydroquinone, resorcinol, dihydroxynaphthalene and 4,4'-bisphenol.

4. The polyaryl ether copolymer according to any of claims 1 to 3, wherein Ar¹ is unsubstituted C₆-C₁₂-aryl.

5. The polyaryl ether copolymer according to any of claims 1 to 4, wherein building blocks of the general formulae I and II are each present in a proportion of from 5 to 95 mol%, with the sum of the proportions of the building blocks of the general formulae I and II and B being 100 mol%.

6. A process for preparing polyaryl ether copolymers according to any of claims 1 to 5 by reacting polyaryl ether copolymers made up of building blocks of the general formula II and B with sulfuric acid.

7. A polymer blend comprising at least one polyaryl ether copolymer according to any of claims 1 to 5 and at least one polymer selected from the group consisting of polyether sulfones, polysulfones, polyether ketones, polyetherimides, polyimides, polybenzimidazoles, polyamidimides and polyamides.

8. A process for preparing polymer blends as defined in claim 7, wherein polyaryl ether copolymers according to any of claims 1 to 5 are mixed in solution with the further polymer or polymers, likewise in solution.

9. The use of a polyaryl ether copolymer according to any of claims 1 to 5 in the production of membranes.

10. A membrane comprising at least one polyaryl ether copolymer according to any of claims 1 to 5.

## Revendications

1. Copolymères de poly(éther arylique) ramifiés, **caractérisés en ce qu'**ils sont composés d'éléments constitutifs des formules générales I et II 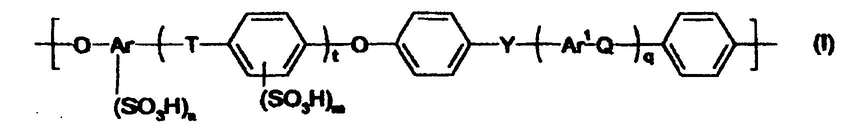 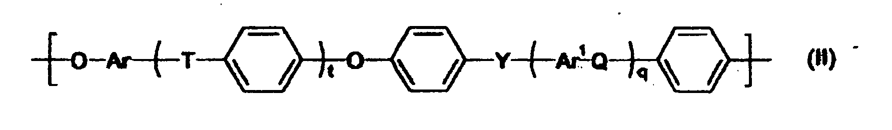 avec les significations suivantes :
t, q : indépendamment l'un de l'autre, 0, 1, 2 ou 3,
m : 0 à 4,
n : 1 à 4,
Q, T, Y : indépendamment les uns des autres, à chaque fois une liaison chimique ou des groupes choisis parmi -O-, -S-, -SO₂-, S=O, C=O, -N=N-, -R^{a}C=CR^{b}, -CR^{c}R^{d}-, où R^{a} et R^{b} représentent à chaque fois indépendamment l'un de l'autre un atome d'hydrogène ou un groupe alkyle en C₁ à C₁₂ et R^{c} et R^{d} représentent à chaque fois indépendamment l'un de l'autre un atome d'hydrogène ou un groupe alkyle en C₁ à C₁₂, alcoxy en C₁ à C₁₂ ou aryle en C₆ à C₁₈, et où R^{c} et R^{d} lorsqu'ils représentent des groupes alkyle, alcoxy ou aryle, peuvent indépendamment l'un de l'autre être substitués par des atomes de fluor et / ou de chlore, ou bien où R^{c} et R^{d} peuvent former ensemble, avec l'atome de C auquel ils sont liés, un groupe cycloalkyle en C₃ à C₁₂, qui peut être substitué par un ou plusieurs groupes alkyle en C₁ à C₆, auquel cas au moins un parmi Q, T et Y est différent de-O-, et au moins un parmi Q, T et Y représente-SO₂-, et
Ar, Ar¹ : indépendamment l'un de l'autre, des groupes aryle en C₆ à C₁₈, qui peuvent être substitués par des groupes alkyle en C₁ à C₁₂, aryle en C₆ à C₁₈, alcoxy en C₁ à C₁₂ ou des atomes d'halogène,
et qu'en outre ils présentent de 0,1 à 10% en poids, par rapport au poids total du copolymère, d'éléments constitutifs B (composants de ramification), qui sont dérivés de composés présentant au moins trois fonctionnalités hydroxyle, les fonctions hydroxyle étant converties en fonctions éther lors de l'incorporation dans la chaîne polymère.

2. Copolymère de poly(éther arylique) suivant la revendication 1, **caractérisé en ce que** Q, T et Y représentent indépendamment les uns des autres -O- ou -SO₂-.

3. Copolymère de poly(éther arylique) suivant la revendication 1 ou 2, **caractérisé en ce qu'**Ar est choisi dans le groupe formé par l'hydroquinone, la résorcine, le dihydroxynaphtalène et le 4,4'-bisphénol.

4. Copolymère de poly(éther arylique) suivant l'une quelconque des revendications 1 à 3, **caractérisé en ce qu'**Ar' représente un aryle en C₆ à C₁₂ non substitué.

5. Copolymère de poly(éther arylique) suivant l'une quelconque des revendications 1 à 4, **caractérisé en ce que** des éléments constitutifs des formules générales I et II sont à chaque fois présents à raison de 5 à 95% molaires, la somme des fractions des éléments constitutifs des formule générales I et II et de B totalisant 100% molaires.

6. Procédé de préparation de copolymères de poly(éther arylique) suivant l'une quelconque des revendications 1 à 5 par réaction de copolymères de poly(éther arylique) composés d'éléments constitutifs de formule générale I et II et de B avec de l'acide sulfurique.

7. Mélanges de polymères, contenant au moins un copolymère de poly(éther arylique) suivant l'une quelconque des revendications 1 à 5 et au moins un polymère choisi dans le groupe formé par des polyéthersulfones, des polysulfones, des polyéthercétones, des polyétherimides, des polyimides, des polybenzimidazoles, des polyamidimides et des polyamides.

8. Procédé de préparation de mélanges de polymères comme défini dans la revendication 7, **caractérisé en ce que** l'on mélange des copolymères de poly(éther arylique) suivant l'une quelconque des revendications 1 à 5, en solution, avec le ou les autres polymères, également en solution.

9. Utilisation d'un copolymère de poly(éther arylique) suivant l'une quelconque des revendications 1 à 5 dans la préparation de membranes.

10. Membranes contenant au moins un copolymère de poly(éther arylique) suivant l'une quelconque des revendications 1 à 5.
